# EUROPÄISCHE PATENTSCHRIFT

(11) **EP 1 194 820 B1**
(45) Veröffentlichungstag und Bekanntmachung des Hinweises auf die Patenterteilung: **25.02.2004**
(21) Anmeldenummer: 00947826.4
(22) Anmeldetag: 03.07.2000
(51) Int. Cl.: G05B 19/418

(54) **VERFAHREN ZUR ÜBERWACHUNG ODER ZUR INSTALLATION NEUER PROGRAMMCODES IN EINER INDUSTRIELLEN ANLAGE**
METHOD FOR MONITORING OR INSTALLING NEW PROGRAM CODES IN AN INDUSTRIAL INSTALLATION
PROCEDE POUR SURVEILLER OU INSTALLER DE NOUVEAUX CODES PROGRAMMES DANS UNE INSTALLATION INDUSTRIELLE

(30) Priorität: 02.07.1999 DE 19930660
(43) Veröffentlichungstag der Anmeldung: 10.04.2002
(73) Patentinhaber: SIEMENS AKTIENGESELLSCHAFT, 80333 München (DE)
(72) Erfinder: HEIMKE, Thomas, D-91056 Erlangen (DE); HÖHNE, Joachim, D-91052 Erlangen (DE)
(86) Internationale Anmeldenummer: PCT/DE2000/002076
(87) Internationale Veröffentlichungsnummer: WO 2001/002891

(56) Entgegenhaltungen:
- EP-A- 0 825 506
- EP-A- 0 903 889
- DE-A- 19 615 190
- DE-A- 19 725 916
- DE-U- 29 600 609
- GB-A- 2 149 551
- US-A- 5 588 109
- US-A- 5 805 442
- "FACTORY MONITORING VIA THE INTERNET" MACHINE DESIGN,US,PENTON,INC. CLEVELAND, Bd. 69, Nr. 6, 20. März 1997 (1997-03-20), Seite 34 XP000726280 ISSN: 0024-9114

## Beschreibung

Die Erfindung betrifft ein Verfahren zur Überwachung einer industriellen Anlage oder zur Installation neuer Programmcodes in einer industriellen Anlage.

Aus der DE 29 60 609 U1 ist ein Automatisierungsgerät bekannt, welchem Software-Funktionsbausteine eines Steuerprogramms zuführbar sind, welches das Automatisierungsgerät während eines Steuerbetriebs zyklisch, interrupt-gesteuert bzw. prioritätsgesteuert bearbeitet, wobei die Software-Funktionsbausteine ladbar und zur Laufzeit des Steuerprogramms in dieses einbindbar ausgebildet sind.

Zur Fernüberwachung industrieller Anlagen werden bekanntermaßen entsprechende Prozeßprotokolle und Log-Dateien ihrer Automatisierungssysteme ausgewertet. Entscheidungen, wie z.B. auf Warnmeldungen zu reagieren ist, können dadurch erst mit größerer Zeitverzögerung getroffen werden, da die Auswertung der Informationen prinzipiell offline durchgeführt wird. Besondere Probleme sind z.B. dadurch bedingt, daß Anlagen und Auswertezentrum sich in unterschiedlichen Zeitzonen befinden können oder daß entsprechend qualifiziertes Personal nicht 24 Stunden am Tag zur Verfügung steht. Somit kann es passieren, daß eine Auswertung mit einigen Stunden Verzögerung erfolgt und die zur Auswertung notwendigen Log-Dateien bereits überschrieben sind. Außerdem kann durch die stichprobenartige Auswertung nicht auf alle Störmeldungen reagiert werden, da nicht alle Informationen übertragen werden. Damit ist eine vollständige und umfassende Fernüberwachung einer industriellen Anlage nur eingeschränkt möglich. Entsprechend ist es Aufgabe der Erfindung, eine verbesserte Überwachung einer industriellen Großanlage zu ermöglichen.

Die zuvor beschriebene Aufgabe wird erfindungsgemäß durch ein Verfahren gemäß Anspruch 1 gelöst.

Die Installation von Programmcodes, insbesondere von Steuerprogrammcodes, zur Regelung und Steuerung einer industriellen Anlage, insbesondere einer Anlage der Grundstoffindustrie sowie deren Teilsysteme, wird verbessert, indem zur Installation von neuen Steuerprogrammcodes zur Regelung der Steuerung einer industriellen Anlage, insbesondere einer Anlage der Grundstoffindustrie, der neue Steuerprogrammcode von einer Auswertezentrale oder einer Entwicklungszentrale an die industrielle Anlage, insbesondere die Anlage der Grundstoffindustrie, übersandt und von einem mobilen Programmcode selbständig auf der industriellen Anlage, insbesondere der Anlage der Grundstoffindustrie, installiert und in Betrieb genommen wird. Dabei wird der mobile Programmcode von der Auswertezentrale oder der Entwicklungszentrale an die industrielle Anlage, insbesondere die Anlage der Grundstoffindustrie, übertragen.

In weiterhin vorteilhafter Ausgestaltung der Erfindung werden Informationen zwischen der Auswertezentrale oder der Entwicklungszentrale und der industriellen Anlage, insbesondere der Anlage der Grundstoffindustrie, über ISDN, Satellit oder Internet übertragen.

Es ist möglich, die Auswertezentrale als Entwicklungszentrale zu nutzen.

In vorteilhafter Ausgestaltung der Erfindung ist der mobile Programmcode JAVA-Programmcode.

In vorteilhafter Ausgestaltung der Erfindung läuft der mobile Programmcode auf zur Steuerung oder Regelung der industriellen Anlage, insbesondere der Anlage der Grundstoffindustrie, vorgesehener Hardware ab.

Mit Vorteil ist der installierte mobile Programmcode zur Regelung oder Steuerung der industriellen Anlage zur Überwachung der industriellen Anlage ausgebildet.

Mit Vorteil überwacht der mobile Programmcode die industrielle Anlage selbständig auf Fehler oder besondere Ereignisse, wobei im Falle eines Fehlers oder eines besonderen Ereignisses die zur Auswertung des Fehlers oder des besonderen Ereignisses notwendigen Informationen mittels des mobilen Programmcodes oder eines weiteren mobilen Programmcodes an die Auswertezentrale übertragen werden. Die Auswertezentrale ist räumlich von der industriellen Anlagen, insbesondere der Anlage der Grundstoffindustrie, getrennt. Unter den zuvor erwähnten besonderen Ereignissen sind Überschreitungen von Grenzwerten oder Trends von besonderer Bedeutung zu verstehen. Besondere Ereignisse können aber auch Toleranzabweichungen von Prozessdaten (Bandprofilfehler, Temperaturfehler usw.) oder Besonderheiten im Konvergenzverhalten bei der Adaption von Modellen sein. Auf diese Weise ist eine viel schnellere und umfassendere Auswertung von Fehlern, Grenzwertüberschreitungen, usw. möglich. Von besonderem Vorteil ist es weiterhin, mittels der durch den mobilen Programmcode ermittelten Informationen eine Trenderkennung von sich anbahnenden Störfällen durchzuführen. Dies erlaubt z.B. eine präventive Wartung einer entsprechenden Anlage.

Weitere Vorteile und Einzelheiten ergeben sich aus der nachfolgenden Beschreibung eines Ausführungsbeispiels.

Die FIG zeigt in beispielhafter Ausgestaltung eine schematisch dargestellte industrielle Anlage 30 mit ihrem Leitsystem und ihren Aktoren und Sensoren ohne den eigentlichen Prozeßablauf. Die industrielle Anlage 30 weist einen Industrial-Ethernet-Bus 9 auf, der zwei gleich oder unterschiedlich ausgestaltete Automatisierungsgeräte 5 und 6, einen Bedienrechner 4 sowie einen Inbetriebsetzungsrechner 1 datentechnisch miteinander verbindet. Über einen Rechner 7 ist der Industrial-Ethernet-Bus 9 mit einem Standard-Ethernet-Bus 8 verbunden. Mit dem Standard-Ethernet-Bus 8 sind ein Bedienrechner 2 und ein zentraler Bedienrechner 3 verbunden. Über ein Bussystem 23, das als Profibus ausgebildet ist, sind verschiedene Aktoren oder Sensoren 12, 13, 14, 15 datentechnisch mit dem Automatisierungsgerät 5 verbunden. Ferner ist eine dezentrale Peripherie 10 über das Bussystem 23 mit dem Automatisierungsgerät 6 verbunden. Über ein Bussystem 24, das als Profibus ausgebildet ist, sind verschiedene Aktoren oder Sensoren 16, 17, 18, 19 datentechnisch mit dem Automatisierungsgerät 6 verbunden. Ferner ist eine dezentrale Peripherie 11 über das Bussystem 24 mit dem Automatisierungsgerät 6 verbunden. Über die dezentrale Peripherie 11 sind verschiedene Aktoren und Sensoren 20, 21, 22 über das Automatisierungsgerät 6 ansteuerbar bzw. auswertbar. Die Bedienrechner 2, 3, 4, die Automatisierungsgeräte 5, 6, die dezentralen Peripherien 10, 11, die Aktoren bzw. Sensoren 12, 13, 14, 15, 16, 17, 18, 19, 20, 21, 22 sowie die Bussysteme 8, 9, 23, 24 dienen dem Betrieb der industriellen Anlage.

Bezugszeichen 40 bezeichnet eine räumlich von der industriellen Anlage 30 getrennte Auswertezentrale, die vorteilhafterweise auch als Entwicklungszentrale genutzt wird. Die Auswertezentrale 40 weist in beispielhafter Ausgestaltung ein Rechnersystem mit z.B. mehreren über ein Bussystem 43 gekoppelten Rechner 41 und 42 auf. Die industrielle Anlage 30 und die Auswertezentrale 40 sind über eine Kommunikationsverbindung 50 datentechnisch miteinander verbunden. Dabei muss es sich um keine sogenannte stehende Leitung handeln. In beispielhafter Ausgestaltung stehen die industrielle Anlage 30 und die Auswertezentrale 40 datentechnisch über den Inbetriebsetzüngsrechner 1 auf Seiten der industriellen Anlage 30 und den Rechner 41 auf Seiten der Auswertezentrale 40 miteinander in Verbindung. Zur überwachung der industriellen Anlage 30 wird mobiler Programmcode vom Rechner 41 an den Inbetriebsetzungsrechner 1 übersandt. Mittels des übersendeten mobilen Programmcodes, der auf dem Inbetriebsetzungsrechner 1 abläuft, werden die anderen Komponenten 2, 3, 4, 5, 6, 7, 8, 9, 10, 11, 12, 13, 14, 15, 16, 17, 18, 19, 20, 21, 22 auf Fehler oder besondere Ereignisse, wie etwa Grenzwertüberschreitungen, überwacht. Dazu erzeugt der auf dem Inbetriebsetzungsrechner 1 arbeitende mobile Programmcode automatisch weitere mobile Programmcodes, die vom Inbetriebsetzungsrechner 1 zu den Automatisierungsgeräten 5, 6, den dezentralen Peripherien 10 und 11 sowie zu den Aktoren bzw. Sensoren 12, 13, 14, 15, 16, 17, 18, 19, 20, 21, 22 und ggf. zu den Bedienrechnern 2, 3, 4 übertragen werden. Detektiert einer dieser übersandten mobilen Programmcodes einen Fehler oder ein besonderes Ereignis, so übersendet dieser mobile Programmcode eine Mitteilung über diesen Fehler oder das besondere Ereignis sowie alle zur Auswertung notwendigen Informationen an den auf dem Inbetriebsetzungsrechner 1 installierten mobilen Programmcode, der die Kommunikationsverbindung 50 zu dem Rechner 41 aufbaut und diese Informationen dann an den Rechner 41 überträgt. Die übertragenen Informationen können z.B. Log-Dateien sein, die aufgrund von Warn- und Fehlermeldungen erzeugt werden. Ferner können es Toleranzabweichungen von Prozessdaten (z.B. Bandprofilfehler, Temperaturfehler, usw.), Adaptionskoeffizienten oder Koeffizienten neuronaler Netze sowie die Zustände von Rechnern (z.B. Speicher, Festplattenkapazität, CPU-Auslastung, usw.) sein. Außerdem kann vorgesehen werden, die Häufigkeit von Warnmeldungen zu registrieren und statistisch auszuwerten.

In besonders vorteilhafter Weise wird der mobile Programmcode in JAVA implementiert. Dies erfolgt vorteilhafterweise in Anlehnung an das Aglet-Konzept, wie es bei D.B. Lange, M. Oshima: "Programming and Developing JAVA Mobile Agents with Aglets", Edison-Wesley, 1998 offenbart ist.

Die Erfindung wird besonders vorteilhafterweise in Walzwerken eingesetzt.

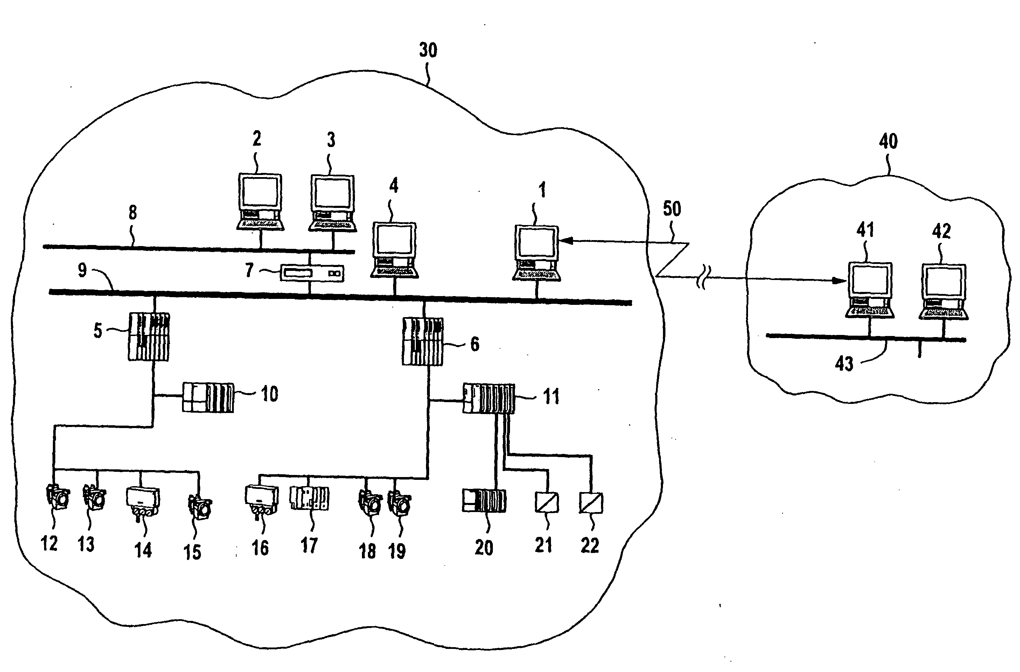

## Patentansprüche

1. Verfahren zur Installation eines Programmcodes zur Regelung oder Steuerung einer industriellenAnlage, insbesondere einer Anlage der Grundstoffindustrie,
**dadurch gekennzeichnet, dass** der Programmcode, der als mobiler Programmcode ausgebildet ist, von einer Auswertezentrale (40) oder Entwicklungszentrale an die industrielle Anlage, insbesondere die Anlage (30) der Grundstoffindustrie, übertragen und selbständig auf der industriellen Anlage (30) installiert und in Betrieb genommen wird, und
dass der mobile Programmcode auf der industriellen Anlage (30) gemäß einer vorgegebenen Aufgabenstellung weitere mobile Programmcodes erzeugt und diese weiteren mobilen Programmcodes innerhalb der industriellen Anlage (30) übertragen werden.

2. Verfahren nach Anspruch 1,
**dadurch gekennzeichnet,**
**dass** die Übertragung des mobilen Programmcodes zwischen der Auswertezentrale (40) oder der Entwicklungszentrale und der industriellen Anlage (30) über ISDN, Satellit oder Internet übertragen werden.

3. Verfahren nach Anspruch 1 oder 2,
**dadurch gekennzeichnet,**
**daß** der mobile Programmcode JAVA-Programmcode ist.

4. Verfahren nach Anspruch 3,
**dadurch gekennzeichnet,**
**dass** der mobile Programmcode auf zur Steuerung oder Regelung der industriellen Anlage (30) vorgesehener Hardware abläuft.

5. Verfahren nach einem der vorangehenden Ansprüche,
**dadurch gekennzeichnet,**
**dass** der installierte mobile Programmcode zur Regelung oder Steuerung der industriellen Anlage (30) zur Überwachung der industriellen Anlage (30) ausgebildet ist.

6. Verfahren nach Anspruch 5,
**dadurch gekennzeichnet,**
**dass** der mobile Programmcode die industrielle Anlage (30) selbständig auf Fehler oder besondere Ereignisse überwacht, wobei im Falle eines Fehlers oder eines besonderen Ereignisses die zur Auswertung des Fehlers oder des besonderen Ereignisses notwendigen Informationen mittels des mobilen Programmcodes oder eines weiteren mobilen Programmcodes an die Auswertezentrale (40) übertragen werden.

## Claims

1. Method of installing program code for the closed-loop or open-loop control of an industrial installation, in particular an installation in the raw materials industry, **characterized in that** the program code, which is designed as mobile program code, is transmitted from an evaluation centre (40) or development centre to the industrial installation, in particular the installation (30) in the raw materials industry, and is installed and commissioned independently on the industrial installation (30), and **in that** the mobile program code on the industrial installation (30) generates further mobile program codes in accordance with a predefined task, and these further mobile program codes are transmitted within the industrial installation (30).

2. Method according to Claim 1, **characterized in that** the mobile program codes are transmitted between the evaluation centre (40) or the development centre and the industrial installation (30) via ISDN, satellite or Internet.

3. Method according to Claim 1 or 2, **characterized in that** the mobile program code is JAVA program code.

4. Method according to Claim 3, **characterized in that** the mobile program code runs on hardware provided for the open-loop or closed-loop control of the industrial installation (30).

5. Method according to one of the preceding claims, **characterized in that** the installed mobile program code for the closed-loop or open-loop control of the industrial installation (30) is designed to monitor the industrial installation (30).

6. Method according to Claim 5, **characterized in that** the mobile program code monitors the industrial installation (30) independently for faults or special events, in the event of a fault or a special event the information needed to evaluate the fault or the special event being transmitted to the evaluation centre (40) by means of the mobile program code or further mobile program code.

## Revendications

1. Procédé pour l'installation d'un code programme pour la régulation ou la commande d'une installation industrielle, notamment d'une installation de l'industrie primaire,
**caractérisé par le fait que** le code programme qui est conçu comme un code programme mobile est transmis par un centre d'évaluation (40) ou un centre de développement à l'installation industrielle, notamment à l'installation (30) de l'industrie primaire, et est installé et mis en service automatiquement sur l'Installation industrielle (30), et
le code programme mobile sur l'installation industrielle (30) produit selon une définition de tâche prédéterminée d'autres codes programmes mobiles et ces autres codes programmes mobiles sont transmis à l'intérieur de l'installation industrielle (30).

2. Procédé selon la revendication 1,
**caractérisé par le fait que** la transmission du code programme mobile entre le centre d'évaluation (40) ou le centre de développement et l'installation industrielle (30) s'effectue via le réseau RNIS, des satellites ou Internet.

3. Procédé selon la revendication 1 ou 2,
**caractérisé par le fait que** le code programme mobile est un code programme JAVA.

4. Procédé selon la revendication 3,
**caractérisé par le fait que** le code programme mobile s'exécute sur un matériel informatique prévu pour la commande ou la régulation de l'Installation industrielle (30).

5. Procédé selon l'une des revendications précédentes,
**caractérisé par le fait que** le code programme mobile installé est conçu pour la régulation ou la commande de l'installation industrielle (30) en vue de la surveillance de l'installation industrielle (30).

6. Procédé selon la revendication 5,
**caractérisé par le fait que** le code programme mobile surveille automatiquement l'installation industrielle (30) quant à l'apparition d'erreurs ou d'événements particuliers sachant que, en présence d'une erreur ou d'un événement particulier, les informations nécessaires à l'évaluation de l'erreur ou de l'événement particulier sont transmises au moyen du code programme mobile ou d'un autre code programme mobile au centre d'évaluation (40).
